Europäisches Patentamt

European Patent Office

Office européen des brevets

(11) Veröffentlichungsnummer: **0 267 373 B1**

(12) **EUROPÄISCHE PATENTSCHRIFT**

(45) Veröffentlichungstag der Patentschrift: **22.04.92**

(51) Int. Cl.⁵: **B60R 1/06**

(21) Anmeldenummer: **87111021.9**

(22) Anmeldetag: **30.07.87**

(54) **Halterung für einen Aussenrückspiegel eines Kraftfahrzeuges.**

(30) Priorität: **21.08.86 DE 3628454**

(43) Veröffentlichungstag der Anmeldung:
**18.05.88 Patentblatt 88/20**

(45) Bekanntmachung des Hinweises auf die
Patenterteilung:
**22.04.92 Patentblatt 92/17**

(84) Benannte Vertragsstaaten:
**AT DE FR GB IT**

(56) Entgegenhaltungen:
**DE-C- 2 418 581**
**DE-U- 8 004 330**
**GB-A- 1 496 001**

(73) Patentinhaber: **Klöckner-Humboldt-Deutz AG**
**Otto Strasse 1**
**W-5000 Köln 90(DE)**

(72) Erfinder: **Bender, Berthold**
**Elisentalstrasse 40**
**W-5227 Windeck-Dattenfeld(DE)**

## Beschreibung

Die Erfindung bezieht sich auf eine Halterung für einen Außenrückblickspiegel eines Kraftfahrzeuges mit einem im wesentlichen u-förmigen, den Außenrückblickspiegel tragenden Bügel, der an seinen Enden jeweils über einen Schwenkzapfen an einem karosseriefesten Kalter schwenkbar geführt und in einer Ausnehmung der Kalter in seiner Normallage verrastbar ist, wobei die Halter in einer vertikalen Ebene an der Karosserie angebracht sind.

Bei einer bekannten Halterung für einen Außenrückblickspiegel der im Oberbegriff des Anspruchs 1 aufgeführten Gattung (DE-A-2 418 581) dient ein schwenkbar gelagerter Tragarm zur Halterung des Außenrückblickspiegels. Die Lagerung wird dabei jeweils aus zwei federnd belasteten sogenannten Wänden gebildet, die mit einer Verrastung für den u-förmig ausgeführten Tragarm bzw. Tragbügel versehen sind. Diese bekannte Halterung für einen Außenrückblickspiegel stellt eine sehr aufwendige und damit kostenintensive Konstruktion dar. Weiterhin beansprucht die Gestaltung der Tragarmlagerung viel Bauraum, mit dem das seitliche Blickfeld des Fahrers nachteilig beeinflußt wird. Außerdem können funktionelle Probleme der Halterung auftreten durch die horizontal angeordneten Wände der Tragarmlagerung, deren Zwischenraum zur Schmutzansammlung neigt, die nachteilig die Korrosion fördert.

Aus der DE-U-8 004 330 ist eine weitere Halterung eines Rückblickspiegels bekannt, der über einen Tragarm und eine federbelastete, lösbare Rastanordnung schwenkbar ist. Der Tragarm kann auch selbstfedernd vorgespannt wirken. Die an jedem Arm der Spiegelhalterung befindliche Rastanordnung wird gebildet aus einer Vielzahl einzelner, kostenintensiv zu fertigender Bauteile, die außerdem zur bleibenden Schwenkbarkeit der Spiegelhalterung vor Korrosion geschützt werden müssen.

Der Erfindung liegt daher die Aufgabe zugrunde, eine Halterung für einen Außenrückblickspiegel eines Kraftfahrzeuges zu schaffen, die kostengünstig in der Herstellung ist und eine geringe Reparaturanfälligkeit besitzt.

Diese Aufgabe wird durch die im Kennzeichen des Anspruchs 1 aufgeführten Merkmale gelöst.

Durch die Verwendung eines eigenfedernd vorgespannten U-förmigen Bügels kann auf besondere Federelemente an den Haltern verzichtet werden. Die Halter benötigen weiterhin auch keine zweite, den Bügel führende Wand, da der Bügel aufgrund seiner Eigenfederung sicher in der Ausnehmung des Halters anliegt. Die Vorspannung des gesamten Bügels wirkt sich weiter vorteilhaft schwingungstilgend für den Außenrückblickspiegel während des Fahrzeugbetriebs aus. Eine kostengünstige Rastung wird erreicht durch Ausnehmungen in den Haltern in Form von V-förmigen Kerben, die in der Einbaulage gegenüberliegend angeordnet sind. Diese Ausgestaltung bewirkt bei einem rohrförmigen Bügel eine linienförmige Anlage des Bügels in der V-förmigen Kerbe, durch die eine nur geringe Korrosionsgefährdung gegeben ist. Die erfindungsgemäße Spiegel-Halterung weist als Schwenkzapfen je eine in den Halter eingeschraubte Schraube auf.

Weitere vorteilhafte Ausgestaltungsbeispiele der Erfindung geben die Ansprüche 2 und 3 wieder.

Zur weiteren Erläuterung der Erfindung wird auf die Zeichnungen verwiesen, in der ein Ausgestaltungsbeispiel vereinfacht dargestellt ist.

Es zeigen:

Fig.1: eine aus einem Bügel und Haltern bestehende Halterung für einen Außenrückblickspiegel,

Fig.2: einen im vergrößerten Maßstab dargestellten Schnitt durch einen Halter und den Bügel gemäß Linie II-II in Figur 1.

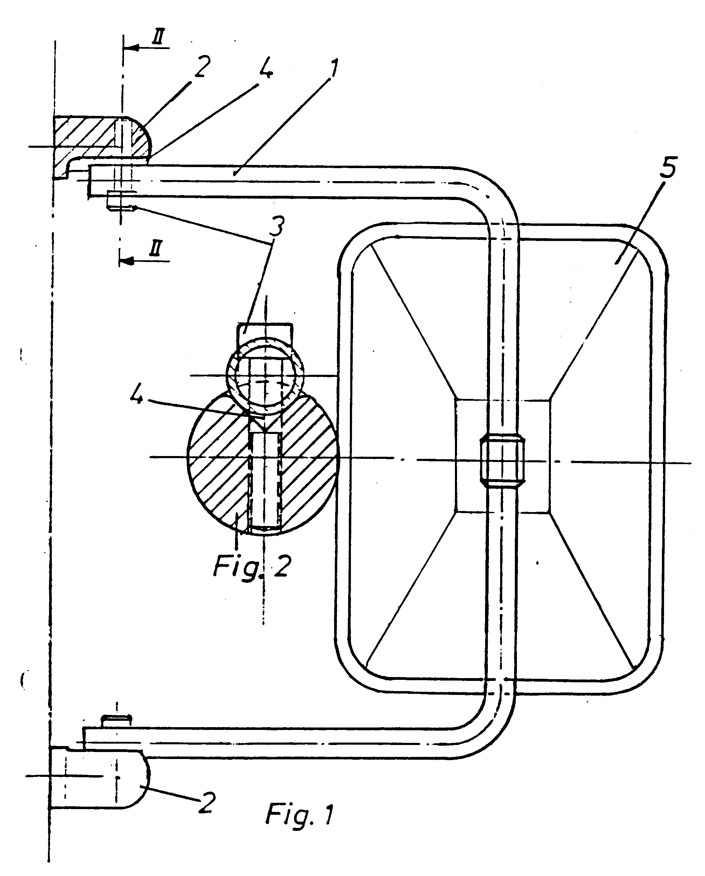

In den Fig. 1 und 2 ist, soweit dargestellt, mit 1 ein Bügel bezeichnet, der mit einer Eigenfederung im Sinne einer Spreizung seiner Enden versehen ist. Der Bügel 1 ist über den Halter 2 beispielsweise an einer Karosserie eines Fahrzeugs befestigt. Diese Halter 2, von denen der obere im Schnitt dargestellt ist, sind in einer vertikalen Ebene an der Fahrzeugskarosserie befestigt. Die Halter 2 dienen einerseits zur schwenkbaren Halterung des Bügels 1 und sind zu diesem Zweck mit Schwenkzapfen in Form von Schrauben 3 versehen. Andererseits dienen die Halter 2 zur Verrastung des Bügels 1 in einer Normallage und weisen zu diesem Zweck einander zugewandte Ausnehmungen 4 auf, in denen sich der Bügel 1 in seiner verrasteten Normallage befindet. Am Bügel 1 ist ein einstellbarer Außenrückblickspiegel 5 befestigt.

## Patentansprüche

1. Halterung für einen Außenrückblickspiegel (5) eines Kraftfahrzeugs mit einem im wesentlichen U-förmigen, den Außenrückblickspiegel (5) tragenden Bügel (1), der an seinen Enden jeweils über einen Schwenkzapfen (3) an einem karosseriefesten Halter (2) schwenkbar geführt und in einer Ausnehmung (4) der Halter (2) in seiner Normallage verrastbar ist, wobei die Halter in einer vertikalen Ebene an der Karosserie angebracht sind, dadurch gekennzeichnet, daß die Halter (2) mit einander zu- oder abgewandten Ausnehmungen (4) an der Fahrzeugkarosserie angebracht sind und daß die Bügel (1) in Richtung der als Y-förmige Kerbe ausgebildeten Ausnehmungen (4) der Halter (2) eigenfedernd vorgespannt ist, und daß die Schwenkzapfen (3) als in die Halter (2) eingeschraubte Schraube ausgebildet sind.

**2.** Halterung nach Anspruch 1,
dadurch gekennzeichnet, daß die Schwenkzapfen (3) die Halter (2) in der Ausnehmung (4) durchsetzen.

**3.** Halterung nach einem der vorhergehenden Ansprüche,
dadurch gekennzeichnet, daß die als Schrauben ausgebildeten Schwenkzapfen einen Schraubenkopf mit einem der Tiefe der Ausnehmung (4) entsprechenden Axialabstand zum Bügel (1) aufweisen.

## Claims

**1.** A mounting for an exterior rear-view mirror (5) of a motor vehicle with a substantially U-shaped arch piece (1) carrying the exterior rear-view mirror (5), which arch piece (1) is pivotably guided at each of its ends by means of a pivot journal (3) on a holder (2) fast with the vehicle body and is detainable in its normal position in an aperture (4) of the holders (2), the holders being fitted on the body in a vertical plane, characterised in that the holders (2) are provided with apertures (4) facing towards or away from one another on the vehicle body, in that the arch piece (1) is initially stressed by its own resilience in the direction of the apertures (4), formed as V-shaped notches, of the holders (2), and in that the pivot journals (3) are formed each as a screw screwed into the holders (2).

**2.** A mounting according to Claim 1, characterised in that the pivot journals (3) penetrate the holders (2) in the aperture (4).

**3.** A mounting according to any one of the preceding Claims, characterised in that the pivot journals, formed as screws, possess a screw head having an axial spacing from the arch piece (1) corresponding to the depth of the aperture (4).

## Revendications

**1.** Support pour rétroviseur extérieur (5) d'un véhicule à moteur avec un étrier (1) ayant sensiblement la forme d'un U, portant le rétroviseur extérieur (5), étrier qui est monté à chacune de ses extrémités de façon à pouvoir pivoter au moyen d'un tenon (3) de pivotement sur un support (2) solidaire de la carrosserie et peut être encliqueté dans un évidement (4) des supports (2) dans sa position normale, les supports étant disposés dans un plan vertical sur la carrosserie, support pour rétroviseur extérieur caractérisé en ce que les supports (2) sont disposés sur la carrosserie du véhicule par des évidements (4) tournés l'un vers l'autre ou à l'opposé l'un de l'autre, et en ce que l'étrier (1) est précontraint, en étant auto-élastique, dans le sens des évidements (4) du support (2) constitués comme des entailles en forme de V et en ce que les tenons de pivotement (3) sont constitués sous la forme de boulons vissés dans le support (2).

**2.** Support pour rétroviseur extérieur, selon la revendication 1, caractérisé en ce que les tenons de pivotement (3) passent à travers le support (2) dans l'évidement (4).

**3.** Support selon l'une des revendications précédentes, caractérisé en ce que les tenons de pivotement constitués sous la forme de boulons présentent une tête avec une distance axiale correspondant à la profondeur de l'évidement (4) par rapport à l'étrier (1).

EP 0 267 373 B1

Fig. 2

Fig. 1